# EUROPEAN PATENT SPECIFICATION

(11) **EP 0 310 644 B1**
(45) Date of publication and mention of the grant of the patent: **04.08.1993**
(21) Application number: 88903151.4
(22) Date of filing: 12.04.1988
(51) Int. Cl.: B62B 1/10, B62B 1/00

(54) **A HAND TROLLEY**
STECHKARREN
CHARIOT DU TYPE ''DIABLE''

(30) Priority: 13.04.1987 AU 1419/87
(43) Date of publication of application: 12.04.1989
(73) Proprietor: STORAY, Craig Francis, Forthside, TAS 7310 (AU); BALDINI, John Anthony, Melrose, TAS 7310 (AU)
(72) Inventor: STORAY, Craig Francis, Forthside, TAS 7310 (AU); BALDINI, John Anthony, Melrose, TAS 7310 (AU)
(74) Representative: Kierkegaard, Lars-Olov
(86) International application number: AU8800108
(87) International publication number: WO8807951

(56) References cited:
- AU-A-18 909 /67
- AU-A-42 577 /68
- DE-A- 3 506 394
- GB-A- 566 932
- US-A- 2 607 606
- US-A- 2 650 834
- US-A- 2 700 573
- US-A- 3 642 301
- US-A- 3 844 431

## Description

This invention relates to a hand trolley for lifting and moving an object, according to the preamble of Claim 1.

Such trolley comprises a frame to support the object, the support frame having a forwardly directed base section and a rearward section extending upwardly from the base section, the rearward section comprising two elongate members, one on each side of the trolley, a structural support assembly for each elongate member, each structural support assembly comprising a strut extending downwardly and rearwardly from an upper section of the elongate member and a tie-member extending upwardly and rearwardly from a lower section of the elongate member and connected to the lower end of the strut, a wheel assembly comprising a pair of spaced apart wheels rotatably supported by an axle, two link assemblies, one on each side of the trolley, to couple together the support frame and the wheel assembly.

Conventional hand trolleys comprise a frame to support an object to be moved, the frame having a forwardly directed base plate and an upwardly extending section, and a wheel assembly comprising two spaced apart wheels supported for rotation about an axle. In use, conventional hand trolleys are manipulated by a user so that the base plate is positioned underneath the object to be lifted and moved, the user then tilts the support frame rearwardly to lift the support frame and the object carried thereon from the ground so that the load is supported from the ground solely by the wheel assembly, and in this position, the user is able to wheel the trolley to the required location.

Usually, in conventional hand trolleys, the wheel assembly is fixed relative to the support frame so that as the support frame is tilted rearwardly the support frame pivots about the axle of the wheel assembly. The disadvantage with this arrangement is that when heavy and/or bulky objects are to be carried on the trolley it is often difficult to tilt the support frame from an upright rest position to a carry position.

In order to alleviate this disadvantage it is also known to construct hand trolleys so that the wheel assembly and the support frame are coupled together by link arms, one on each side of the trolley, which are connected to the wheel assembly and pivotally connected to the support frame. With such an arrangement, as the hand trolley is tilted rearwardly, the support frame pivots initially about the rear edge of the base plate and the wheel assembly moves simultaneously rearwardly relative to the base plate until the support frame contacts the axle of the wheel assembly, at which point further rearward tilting movement results in the pivot point transferring from the rearward edge of the base plate to the axle. Such relative rearward movement of the wheel assembly has been found to significantly reduce the effort required to transfer the hand trolley from an upright rest position to a carry position.

One disadvantage with the hand trolleys described in the preceding paragraph is that the hand trolleys lack stability when moved rearwardly over obstacles such as upwardly inclined steps. Specifically, it has been found that with such rearward movement, the wheels of the wheel assembly remain against an upright wall of the obstacle and the support frame and the object carried thereon pivot upwardly and rearwardly relative to the axle until the limit of the pivoting movement is reached, at which point the wheel assembly is drawn over the obstacle. However, once the obstacle has been traversed the support frame returns to the normal operating position, and such return generally is accompanied by a hazardous forward jerking movement of the support frame and the object carried thereon. It is known to provide such trolleys with hand operated locking devices. However, such arrangements require frequent operation by the user and are generally inconvenient.

It is an object of the present invention to alleviate the disadvantage described in the preceding paragraph.

To this end the hand trolley according to the present invention is characterised in that each tie-member has an extension and in that each link assembly comprises a link arm pivotally connected at one end by a pivot point to the extension of the associated tie-member and connected at the other end to the axle, whereby in use, as the support frame is tilted rearwardly from a rest position at which the base section contacts the ground to a carry position at which the base section is clear of the ground, the support frame pivots initially about the rearward edge of the base section and then contacts and pivots about the link arms and simultaneously the link arms pivot downwardly so that the pivot points move in an arc around the axle to a position below the level of the axle at which an imaginary line drawn from each pivot point along the link arms and through the centre of the axle intersects or is at least generally coincident with an imaginary line drawn along each elongate member which line represents the direction of force applied in use to pull the trolley upwardly and rearwardly over an obstacle so that the support frame is fixed with respect to the axle, without being mechanically locked, when force is applied to pull the trolley upwardly and rearwardly over the obstacle.

A preferred embodiment of the invention is now described with reference to the accompanying drawings, in which:
Figure 1 is a side cross-sectional view showing the trolley in a rest position with the axle locked to the frame, and showing the angular relationship of the frame, base plate and link assemblies;
Figure 2 is a side cross-sectional view showing the trolley tilted rearwardly relative to the wheels and the rockers in contact with the ground surface and showing the angular relationship of the frame, base plate and link assemblies;
Figure 3 is a side cross-sectional view showing the trolley tilted rearwardly relative to the wheels with the link assemblies in the stop position against the frame and the rockers in contact with the ground and showing the angular relationship of the frame and the link assemblies;
Figure 4 is a side cross-sectional view showing the trolley tilted rearwardly relative to the wheels in the normal wheeling position and showing the rockers raised above the ground and the angular relationship of the frame and the link assemblies;
Figure 5 is a plan view showing the lower portion of the trolley;
Figure 6 is a rearward elevational view of the lower portion of the trolley; and
Figure 7 is a front elevational view of the lower portion of the trolley.

The hand trolley shown in the figures comprises a frame to support an object, a wheel assembly to support the frame and the object carried thereon, and two spaced apart link assemblies, one on each side of the trolley, to couple together the support frame and the wheel assembly.

The support frame comprises a forwardly directed base plate 11 which, in use, is positioned under the object to be carried, and a generally upwardly extending rearward section 13. The base plate 11 is pivotally connected at the intersection with the rearward section 13 so that the base plate 11 can be swung to rest against the rearward section 13. In this position the trolley can readily be stored in a confined space or transported unrestrained, for example on the tray of a truck.

The rearward section 13 comprises two parallel elongate members 15, one on each side of the trolley, which terminate in hand grips 19 and are interconnected by a cross-member 21.

The rearward section 13 further comprises a structural support assembly. The structural support assembly comprises a strut 23 which extends downwardly and rearwardly from an upper section of each elongate member 15 and a tie-member 25 which extends upwardly and rearwardly from a lower section of each elongate member 15 and is connected at its upper end to the strut 23. The structural support assembly further comprises a bar 27 (Figure 5) which interconnects the strut/tie-members on each side of the trolley. The tie-members 25 each include an extension 27.

The wheel assembly comprises a pair of spaced apart wheels 29 supported for rotation on an axle 31.

Each link assembly comprises a link arm 33 which is connected at one end to the axle 31 and pivotally connected at the other end to the extension 27 of the tie-members 25.

The hand trolley further comprises a rocker 41 connected to each tie-member 25. The rockers 41 define intermediate pivot surfaces.

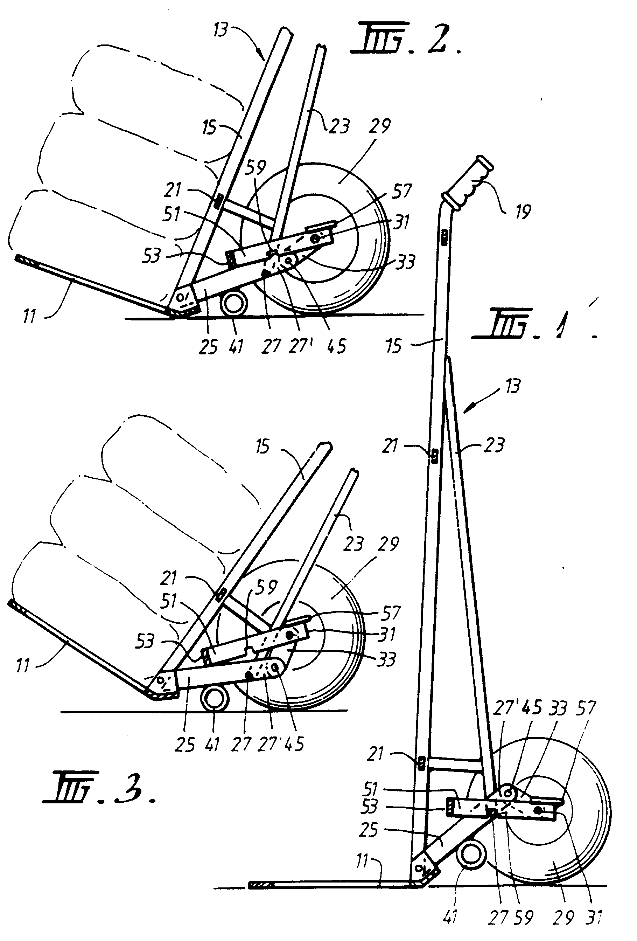

The hand trolley further comprises a locking assembly to lock together the support frame and the wheel assembly in the rest position shown in Figure 1. The locking assembly comprises a pair of side arms 51 One on each side of the trolley pivotally connected to the axle 31. The side arms are interconnected by a cross-member 53 (Figure 5). The cross-member 53 has extensions 55 which rest on the tie-members 25 when the trolley is rearwardly tilted. Each side arm 51 includes a toe-plate 57 at the end adjacent the axle 31. In addition, approximately mid-way along the length of each side arm 51, there is a downwardly directed notch 59 which is arranged to receive the bar 27 which interconnects the strut/tie-members on each side of the trolley. The engagement of the bar 27 in the notches 59 effectively locks together the support frame and the wheel assembly, such as is shown in Figure 1.

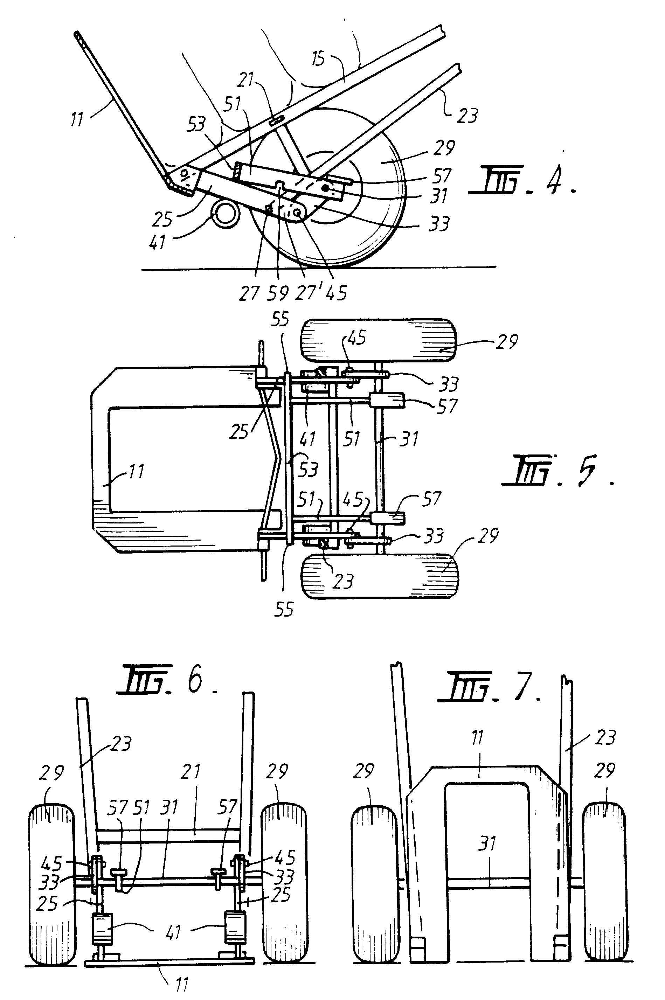

In use, the trolley is released from the rest position shown in Figure 1 by depressing one of the toe-plates 57 to pivot the locking assembly upwardly around the axle 29 and to release the notches 59 from the bar 27. An operator can then tilt the support frame rearwardly to the carry position shown in Figure 4. As the support frame is tilted rearwardly the support frame pivots initially on the rearward edge 39 of the base plate 11 until the rockers 41 contact the ground or the floor surface. At this point, with further rearward tilting movement the support frame pivots on the intermediate pivot surfaces defined by the rockers 41. As is shown in Figure 3, such rearward tilting movement continues until the struts 23 contact the link arms 33. Further tilting movement lifts the rockers 41 from the ground or floor surface thereby to complete transfer of the load onto the wheel assembly in the carry position shown in Figure 4.

It will be noted that, during the above described rearward pivoting movement the link arms 33 pivot downwardly so that the pivot points 45 of the extensions 27 and the link arms 33 move in an arc around the axle 31.

It will also be noted that when each link arm 33 is in the position shown in Figures 3 and 4 an imaginary line extending from the pivot point 45 along the centre-line of the link arm 33 will intersect an imaginary line extending upwardly from the elongate member 15. The imaginary line from the elongate member, in use, is coincident with the direction of a lifting force applied by an operator to pull the trolley upwardly and rearwardly over an obstacle, such as a step. When each link arm 33 is in the position shown in Figures 3 and 4 the lifting force is directed solely through the link arm 33 (and the link arm 33 on the other side of the trolley) and as a consequence the wheel assembly and the support frame are effectively locked and move together over the obstacle.

It has also been found that such effective locking can be achieved if the imaginary line from each link arm 33 is generally coincident with the imaginary line from the elongate member 15. In this regard, the term "generally coincident" is understood herein to mean that the imaginary line from each link arm 33 may diverge by up to 20° from the imaginary line extending upwardly from the elongate member 15.

In the carry position shown in Figure 4, the trolley can be wheeled to the required location, at which point the trolley can be lowered to the rest position shown in Figure 1. On return to the rest position shown in Figure 1 the notches 59 in the side arms 51 again receive the bar 27 thereby to lock together the wheel assembly and the support frame, the wheels always remaining in contact with the ground or floor surface.

## Claims

1. A hand trolley for lifting and moving an object comprising a frame to support the object, the support frame having a forwardly directed base Section (11) and a rearward section (13) extending upwardly from the base section (11), the rearward section (13) comprising two elongate members (15), one on each side of the trolley, a structural support assembly for each elongate member (15), each structural support assembly comprising a strut (23) extending downwardly and rearwardly from an upper section of the elongate member (15) and a tie-member (25) extending upwardly and rearwardly from a lower section of the elongate member (15) and connected to the lower end of the strut (23), a wheel assembly comprising a pair of spaced apart wheels (29) rotatably supported by an axle (31), two link assemblies, one on each side of the trolley, to couple together the support frame and the wheel assembly, characterised in that each tie-member (25) has an extension (27') and in that each link assembly comprises a link arm (33) pivotally connected at one end by a pivot point (45) to the extension (27') of the associated tie-member(25) and connected at the other end to the axle (31), Whereby in use, as the support frame is tilted rearwardly from a rest position at which the base section (11) contacts the ground to a carry position at which the base section (11) is clear of the ground, the support frame pivots initially about the rearward edge of the base section (11) and then contacts and pivots about the link arms (33) and simultaneously the link arms (33) pivot downwardly so that the pivot points (45) move in an arc around the axle (31) to a position below the level of the axle (31) at which an imaginary line drawn from each pivot point (45) along the link arms (33) and through the centre of the axle (31) intersects or is at least generally coincident with an imaginary line drawn along each elongate member (15) which line represents the direction of force applied in use to pull the trolley upwardly and rearwardly over an obstacle so that the support frame is fixed with respect to the axle (31), without being mechanically locked, when force is applied to pull the trolley upwardly and rearwardly over the obstacle.

2. The hand trolley defined in claim 1, wherein in use as the support frame is tilted rearwardly from the rest position to the carry position the pivot points (45) move in an arc about the axle (31) from a location above the level of the axle (31) to the location below the level of the axle (31).

3. The hand trolley defined in claim 1 or claim 2, wherein the elongate members (15) terminate in handles (19) to be gripped by the operator and a cross-member (21) interconnecting the elongate members (15).

4. The hand trolley defined in any one of the preceding claims, further comprises a rocker (41) connected to the support frame, and wherein the rocker (41) defines an intermediate pivot surface so that in use as the support frame is tilted rearwardly to the carry position the support frame pivots first on the rearward edge of the base section (11) and second on the intermediate pivot surface,

5. The hand trolley defined in claim 4, wherein said rocker (41) is connected to each said tie-member (25).

6. The hand trolley defined in claim 5, wherein the base section (11) is pivotally connected at the intersection with the rearward section (13) so that the base section (11) can be swung up to rest against the rearward section (13).

## Patentansprüche

1. Handkarren zum Anheben und Bewegen eines Gegenstandes mit einem Rahmen zum Tragen des Gegenstandes, wobei der Rahmen einen nach vorne gerichteten Basisteil (11) und, einen hinteren Abschnitt (13) hat, der sich vom Basisteil (11) aus nach oben erstreckt, wobei der hintere Abschnitt (13) an jeder Seite des Handkarrens zwei langgestreckte Teile (15) aufweist sowie für jedes langgestreckte Teil (15) eine Abstützungskonstruktion, die ihrerseits eine Strebe (23) aufweist, die sich vom oberen Teil des langgestreckten Teiles (15) aus nach unten und hinten erstreckt, sowie einen Zuglenker, der sich vom unteren Teil des langgestreckten Teiles (15) aus nach oben und hinten erstreckt und mit dem unteren Ende der Strebe (23) verbunden ist, eine Rad-Anordnung, die ein Paar von im Abstand voneinander angeordneten Rädern (29) aufweist, die drehbar auf einer Achse (31) gelagert sind und auf jeder Seite des Handkarrens jeweils eine Lenkeranordnung, um den Tragrahmen und die Radanordnung miteinander zu verbinden,
dadurch **gekennzeichnet,**
- daß jeder Zuglenker (25) eine Verlängerung (27') hat und
- daß jede Lenkeranordnung einen Anlenkarm (33) umfaßt, der mit einem Ende über einen Schwenkpunkt (25) mit der Verlängerung (27') des zugehörigen Zuglenkers (25) angelenkt ist und mit dem anderen Ende mit der Achse (31) verbunden ist, wodurch im Gebrauch, wenn der Tragrahmen aus einer Ruhestellung, in der der Basisteil (11) den Boden berührt, nach hinten in eine Tragestellung gekippt wird, in der der Basisabschnitt (11) vom Boden frei ist, der Tragrahmen sich anfänglich um die hintere Kante des Basisteiles (11) verschwenkt und dann die Anlenkarme (33) berührt und sich um sie verschwenkt, und gleichzeitig diese Anlenkarme (33) nach unten so verschwenkt, daß die Anlenkpunkte (35) sich auf einem Boden um die Achse 31 in eine Stellung bewegen, die unter dem Niveau der Achse (31) liegt und in der eine imaginäre Linie, die von jedem Schwenkpunkt (35) längs der Anlenkarme (33) durch die Mitte der Achse (31) gezogen wird, eine imaginäre Linie schneidet oder wenigstens im allgemeinen mit ihr zusammenfällt, die längs jedes langgestreckten Teiles (15) gezogen wird, wobei eine solche Linie die Richtung der Kraft darstellt, die bei der Verwendung aufgebracht wird, um den Karren nach oben und hinten über einen Gegenstand zu ziehen, so daß der Stützrahmenin Bezug auf die Achse (31) fixiert ist, ohne mechanisch verriegelt zu sein, wenn die Kraft zum Ziehen des Handkarrens nach oben und hinten über den Gegenstand aufgebracht wird.

2. Handkarren nach Anspruch 1, wobei im Gebrauch dann, wenn der Tragrahmen aus einer Ruhestellung in eine Tragestellung nach hinten gekippt wird, die Anlenkpunkte (35) sich auf einem Kreisbogen um die Achse (31) herum von einer Stelle oberhalb des Niveaus der Achse zu einer Stelle unterhalb dee Niveaus der Achse (31) bewegen.

3. Handkarren nach einem der Ansprüche 1 oder 2, wobei die langgestreckten Teile (15) in Handgriffen (19) enden, die von der Bedienungsperson ergriffen werden können, und wobei eine Querstrebe (21) die langgestreckten Teile (15) miteinander verbindet.

4. Handkarren nach einem der vorangegangenen Ansprüche, mit einer Kufe (41), die mit dem Tragrahmen verbunden ist, wobei die Kufe (41) eine mittlere Schwenkfläche bildet, so daß beim Gebrauch dann, wenn der Tragrahmen nach hinten in eine Tragestellung gekippt wird, der Tragrahmen zuerst auf der Hinterkante des Basisteils. verschwenkt wird und dann auf der mittleren Schwenkfläche.

5. Handkarren nach Anspruch 4, wobei die Kufe (41) mit jedem der Zuglenker (25) verbunden ist.

6. Handkarren nach Anspruch 5, wobei der Basisteil (11) mit dem Schnittpunkt mit dem hinteren Abschnitt (13) gelenkig so verbunden ist, daß der Basisteil (11) nach oben geschwenkt werden kann, um gegen den hinteren Abschnitt (13) anzuliegen.

## Revendications

1. Diable pour soulever et déplacer un objet, comprenant un bâti pour supporter l'objet, ce bâti comportant une section de base (11) dirigé vers l'avant et une section arrière (13) s'étendant vers le haut depuis la section de base (11), la section arrière (13) comprenant deux éléments allongés (15), à raison d'un sur chaque côté du chariot, un ensemble structural de support pour chaque élément allongé (15), chaque ensemble structural de support comprenant une jambe de force (23) s'étedant vers le bas et vers l'arrière depuis une section supérieure de l'élément allongé (15) et un élément de liaison (25) s'étendant vers le haut et vers l'arrière depuis une section inférieure de l'élément allongé (15) et raccordé à l'extrémité inférieure de la jambe de force (23), un ensemble de roues comprenant une paire de roues espacées (29) supportées de façon tournante par un essieu (31), deux ensembles de bielles à raison d'un sur chaque côté du chariot pour accoupler mutuellement le bâti de support et l'ensemble de roues, caractérisé en ce que chaque élément de liaison (25) comporte un prolongement (27') et en ce que chaque ensemble de biellettes comprend une biellette (33) articulée à une de ses extrémités, par un axe d'articulation (45), au prolongement (27') de l'élément de liaison associé (25) et raccordée à son autre extrémité, à l'essieu (31), grâce à quoi, pendant l'utilisation, lorsque l'on incline le bâti de support vers l'arrière depuis une position de repos dans laquelle la section de base (11) est en contact avec le sol jusqu'à une position de transport dans laquelle la section de base (11) est dégagée du sol, le bâti de support pivote initialement autour du bord arrière de la section de base (11), puis vient en contact avec les biellettes (33) et pivote autour de ces biellettes et, simultanément, les biellettes (33) pivotent vers le bas, de sorte que les axes d'articulation(45) se déplacent suivant un arc de cercle autour de l'essieu (31) jusqu'à une position située en dessous du niveau de l'essieu (31) et où une ligne imaginaire tracée depuis chaque axe d'articulation (45) le long des biellettes (33) et passant par le centre de l'essieu (31) intersecte une ligne imaginaire tracée le long de chaque élément allongé (15) ou tout au moins coîncide d'une façon générale avec cette ligne, ladite ligne représentant la direction de la force appliquée pendant l'utilisation pour tirer le diable vers le haut et vers l'arrière au-dessus d'un obstacle, ce qui fait que le bâti de support est fixe par rapport à l'essieu (31) sans être bloqué mécaniquement quand on applique une force pour tirer le chariot vers le haut et vers l'arrière au-dessus de l'obstacle.

2. Diable selon la revendication 1, dans lequel, pendant l'utilisation, lorsque l'on incline le bâti de support vers l'arrière depuis la position de repos jusqu'à la position de transport, les axes d'articulation (45) se déplacent suivant un arc de cercle autour de l'essieu (31) depuis un endroit situé au-dessus du niveau de l'essieu (31) jusqu'à l'endroit situé en dessous du niveau de l'essieu (31).

3. Diable selon la revendication 1 ou la revendication 2, dans lequel les éléments allongés (15) se terminent par des mancherons (19) que l'utilisateur doit saisir et une traverse (21) relie entre eux les éléments allongés (15).

4. Diable selon l'une quelconque des revendications précédentes, comprenant en outre une pièce de basculement (41) fixée au bâti de support, et dans lequel la pièce de basculement (41) définit une surface de pivotement intermédiaire, de telle sorte que, pendant l'utilisation, lorsque l'on incline le bâti de support vers l'arrière jusqu'à la position de transport, le bâti de support pivote tout d'abord sur le bord arrière de la section de base (11) puis sur la surface de pivotement intermédiaire.

5. Diable selon la revendication 4, dans lequel ladite pièce de basculement (41) est fixée à chaque élément de liaison (25).

6. Diable selon la revendication 5, dans lequel la section de base (11) est montée de façon pivotante au niveau de son intersection avec la section arrière (13), de sorte que la section de base (11) peut pivoter vers le haut pour reposer contre la section arrière (13).
